# EUROPÄISCHE PATENTSCHRIFT

(11) **EP 3 660 990 B1**
(45) Veröffentlichungstag und Bekanntmachung des Hinweises auf die Patenterteilung: **10.01.2024**
(21) Anmeldenummer: 18209245.2
(22) Anmeldetag: 29.11.2018
(51) Int. Cl.: H02G 1/08, G02B 6/44, H02G 9/10

(54) **VERFAHREN ZUM BEREITSTELLEN EINER DATENKABELANBINDUNG**
METHOD FOR PROVIDING A DATA CABLE CONNECTION
PROCÉDÉ DE FOURNITURE D'UNE CONNEXION DE CÂBLE DE DONNÉES

(43) Veröffentlichungstag der Anmeldung: 03.06.2020
(73) Patentinhaber: Hauff-Technik GmbH & Co. KG, 89568 Hermaringen (DE)
(72) Erfinder: Scheuring, Horst, 89542 Herbrechtingen (DE); Kurz, Ralf, 89537 Giengen (DE)
(74) Vertreter: König Szynka Tilmann von Renesse Patentanwälte Partnerschaft mbB München

(56) Entgegenhaltungen:
- WO-A1-2009/000004
- GB-A- 2 260 034
- JP-A- H04 102 803
- JP-A- H06 118 253
- JP-A- H10 290 517
- JP-A- H10 336 847
- US-A1- 2001 043 839
- US-B1- 8 588 571

## Beschreibung

Die vorliegende Erfindung betrifft ein Verfahren zum Bereitstellen einer Datenkabelanbindung für eine Datennutzer- oder Verteilerstelle, insbesondere für ein Gebäude.

Aus der US 8,588,571 B1 ist ein Verfahren zur Glasfasererschließung bekannt, bei welchem von einem Hauptkabel Stichleitungen abgezweigt werden, wobei einem jeweiligen Gebäude eine jeweilige Stichleitung zugeordnet ist. Die Enden der Stichleitungen werden dann in wasserdichten Gehäusen verwahrt.

Aus der JP H10 336847 A und der US 2001/043839 A1 ist die Nutzung eines bestehenden Abwasserrohrsystems zur Datenkabel- bzw. Glasfasererschließung bekannt. Dieser Ansatz wird ferner auch in der WO 2009/000004 A1 und der JP H04 102803 A sowie der JP H10 290517 A verfolgt.

Aus einem Fachartikel "Hauff-Technik: Challenges and professional solutions for sealing of power cables in foundations of on shore wind turbines" ist die Verlegung von Stromkabeln durch dicke Fundamentwände mit speziellen Durchführungen bekannt.

Aus der GB 2 260 034 A ist ein Bodentank für Innenraumanwendungen bekannt.

Aus der JP H06 118253 A ist ein Schacht zum Positionieren eines Verbindungsgehäuses bekannt, über welches unterschiedliche Netzebenen miteinander verbunden werden.

Der vorliegende Gegenstand richtet sich speziell auf das letzte Teilstück eines Datenkabelnetzes, nämlich die Anbindung des Nutzers/Verteilers bzw. Gebäudes an eine Datenkabel-Verzweigungsstelle. Bei dieser kann es sich insbesondere um einen Abzweig aus einem Strang handeln, der bspw. entlang einer Straße im Boden verläuft.

Der vorliegenden Erfindung liegt das technische Problem zugrunde, ein vorteilhaftes Verfahren zur Anbindung an eine Datenkabel-Verzweigungsstelle anzugeben.

Dies wird erfindungsgemäß mit dem Verfahren gemäß Anspruch 1 gelöst. Das Datenkabel bzw. ein Leerrohr dafür wird dabei nicht direkt von der Datenkabel-Verzweigungsstelle zu dem Nutzer/Verteiler bzw. Gebäude verlegt, sondern in bzw. über ein Anschlussgehäuse. Dieses wird im Bereich der Straße platziert, also im Falle des Gebäudes jedenfalls außerhalb der Gebäudegrundfläche, je nach Baustadium bzw. Anwendung (Neubau/Bestand) außerhalb des bereits errichteten Gebäudes oder der Fläche, auf welcher das Gebäude später errichtet wird. Das Anschlussgehäuse weist eine Öffnung auf, über die ein Gehäuseinnenraum zugänglich ist. Es wird zwischen der Datenkabel-Verzweigungsstelle und dem Nutzer/Verteiler bzw. Gebäude platziert, wobei
- die Öffnung des Anschlussgehäuses nach oben weist, also oberseitig liegt;
- das Anschlussgehäuse horizontal im Bereich einer Straße positioniert wird;
- das Anschlussgehäuse vertikal auf einer Höhe positioniert wird, die innerhalb einer fertigen Schichtaufbauhöhe der Straße liegt, wobei aber die Öffnung und damit der Gehäuseinnenraum von oben zugänglich bleibt.

Wird dann später der Straßenaufbau erstellt, also die Trag- und Deckschicht aufgebracht (z. B. Schotter aufgeschüttet, verdichtet und asphaltiert bzw. gepflastert), sitzt das Anschlussgehäuse in dem Schichtaufbau der Straße. Die Öffnung ist gleichwohl noch von oben ohne Entfernen der Deckschicht zugänglich, sie kann also im Wesentlichen bündig mit einer Oberkante des fertigen Schichtaufbaus liegen, bspw. der Deckschicht aus Asphalt oder Pflaster bzw. Platten.

Mit dem Platzieren und Anschließen des Anschlussgehäuses an die Datenkabel-Verzweigungsstelle wird ein Zugangspunkt geschaffen, der das weitere Anschlie-ßen bzw. Erschließen der Datennutzer-/Verteilerstelle vereinfachen kann. Alternativ zu einem Gebäude (Büro- oder Wohngebäude) kann es sich hierbei bspw. auch um eine Antennenstation bzw. -einheit handeln (z. B. für öffentliches WLAN), siehe unten im Detail. Zur Veranschaulichung werden die Vorteile des Erfindungsgegenstands zunächst anhand der Erschließung eines Gebäudes diskutiert.

Dabei können sich je nach Anwendung (Neubau/Bestand) unterschiedliche Vorteile ergeben, was im Folgenden illustriert wird. Der Gegenstand richtet sich insbesondere auf eine Glasfaser-Erschließung, bevorzugt ist bzw. sind also die Datenkabel Glasfaserkabel.

Wird die Datenanbindung im Bestand nachgerüstet, kann die Netzverlegung typischerweise für ganze Straßenzüge bzw. Orts- oder Stadtteile erfolgen. Es wird dann die Straße, bspw. der Gehweg, aufgegraben und z. B. ein Kabelstrang verlegt, von dem bei jedem anzuschließenden Haushalt ein Kabel abgezweigt wird (an einer jeweiligen Datenkabel-Verzweigungsstelle). Der straßenseitige Graben wird dann wieder verfüllt und die zuvor aufgebrochene Deckschicht wird wiederhergestellt.

Die Erfinder haben festgestellt, dass sich hierbei jedoch meist nur der kleinere Teil der Anwohner bzw. Eigentümer für eine Nachrüstung sofort entscheidet (typischerweise 1/3). Weitere Anschlüsse werden dann erst später, nach und nach angefragt. Hierfür muss dann jeweils erneut aufgegraben, also insbesondere die Deckschicht aufgebrochen und ein Abzweig zu dem jeweiligen Gebäude verlegt werden, was erheblichen Aufwand bedeutet. Es muss ferner bei jeder Nachbelegung der Bodenaufbau dann auch wiederhergestellt werden (insbesondere die Deckschicht/der Belag).

Demgegenüber bietet das erfindungsgemäße Vorgehen die Möglichkeit, bei den vorerst noch nicht angeschlossenen Gebäuden jeweils ein Anschlussgehäuse zu setzen. Es kann dann entweder sogar bereits das Datenkabel bis in das Anschlussgehäuse verlegt und dort (vorerst) verwahrt werden, oder es kann das Anschlussgehäuse zumindest über das Leerrohr angebunden sein. Soll das Gebäude dann später (nach der eigentlichen Erschließung des Straßenzugs) doch noch angeschlossen werden, muss je nach Position des Anschlussgehäuses zumindest nicht der Gehweg/die Straße aufgegraben werden, mitunter ist auch gar kein Aufgraben notwendig (wenn das Anschlussgehäuse direkt am Gebäude sitzt, siehe unten im Detail).

Auch wenn das Datenkabel nicht gleich bis in das Anschlussgehäuse vorverlegt wird, sondern dieses zunächst nur über das Leerrohr an die Datenkabel-Verzweigungsstelle angebunden ist, kann ein nachträgliches Anschließen des Gebäudes deutlich vereinfacht sein. Durch das Leerrohr kann dann nämlich das Datenkabel nachträglich eingeblasen werden, was über die Datenkabel-Verzweigungsstelle erfolgt.

Das erfindungsgemäße Vorgehen ist jedoch nicht nur bei einer Erschließung im Bestand, sondern auch im Neubau von Vorteil. In einem Neubaugebiet mag es zwar auf den ersten Blick weniger aufwendig und kostengünstiger erscheinen, die einzelnen Gebäude bzw. Gebäudegrundflächen jeweils direkt anzuschließen, also das Datenkabel bzw. Leerrohr dafür von der Datenkabel-Verzweigungsstelle direkt bis zum Gebäude bzw. dessen Grundfläche zu verlegen. Die Erfinder haben jedoch festgestellt, dass der Baufortschritt auf den einzelnen Grundstücken in der Praxis erheblich divergieren kann, sodass einige Gebäude bspw. schon bezogen werden, während sich andere noch im Rohbaustadium befinden, wenn überhaupt. Der Netzbetreiber kann deshalb nicht in einem Zug das gesamte Gebiet erschlie-ßen, sondern wiederum nur nach und nach.

Das erfindungsgemäße Vorgehen eröffnet auch hier eine Möglichkeit der Vorverlegung, bspw. bis an das jeweilige Grundstück. Die Anschlussgehäuse können, wo später die Straße, insbesondere der Gehweg verläuft, bspw. an den Grundstückgrenzen platziert werden. Unabhängig von ihrer Position im Einzelnen kann der Netzbetreiber die einzelnen Datenkabel (für die einzelnen Gebäude bzw. Gebäudegrundflächen) dann in einem Zug bis in die Anschlussgehäuse verlegen, also in einem Arbeitsdurchgang (innerhalb eines Arbeitstages oder mehrerer zusammenhängender). Dieses Vorverlegen bis in die Anschlussgehäuse kann bspw. erfolgen, sobald der erste Haushalt seinen Datenanschluss erhält. Benötigen dann nach und nach die übrigen Haushalte ihren Datenanschluss, ist der Aufwand für die Verlegung dieser letzten Meter deutlich geringer als das Verlegen von der Datenkabel-Verzweigungsstelle aus bzw. über diese. Letzteres erfordert nämlich in der Regel mindestens zwei Techniker, die letzten Meter können auch von einem einzelnen Techniker verlegt werden.

Generell werden die Datenkabel von einem Knotenpunkt aus verlegt, an dem mehrere, also die einzelnen Datenkabelverzweigungsstellen zusammenlaufen. Von diesem Knotenpunkt kann sich, wie vorstehend geschildert, ein Kabel- bzw. Leerrohrstrang entlang der Straße erstrecken (im Erdreich), wobei an den Gebäuden (bzw. allgemein Nutzern/Verteilern) jeweils ein Kabel/Leerrohr abgeht. An dem übergeordneten Knotenpunkt kann bspw. ein Verteilerkasten (Spleißkasten) oder eine Spleißmuffe angeordnet sein. Zwischen dem Knotenpunkt und den einzelnen Gebäuden (Nutzern/Verteilern) kann eine gewisse Wegstrecke liegen, und die Datenkabel werden mit einem Spezialwerkzeug in die Leerrohre eingeblasen und damit über entsprechend große Strecken vorgeschoben. In dieser Hinsicht ist das vorstehend geschilderte Vorgehen, also das Vorverlegen vorerst nicht benötigter Datenkabel in einem Arbeitsgang, insoweit von Vorteil, als dann das entsprechende Spezialwerkzeug (Einblasvorrichtung) nur einmal an dem Knotenpunkt bereitgestellt werden muss. Die Arbeiten am Knotenpunkt können auch hinsichtlich der Kabelverbindung/-verzweigung dort Spezialwerkzeug erfordern, bspw. einen Kabelspleißer im Falle der bevorzugten Glasfaserkabel. Auch dieser muss dann nur einmal samt entsprechend geschultem Personal bereitgestellt werden, jedenfalls am Knotenpunkt (mitunter auch generell, vgl. insbesondere die Variante "Stecker" unten).

Im Falle des Gebäudes sitzt das straßenseitig angeordnete Anschlussgehäuse außerhalb der Gebäudegrundfläche, also außerhalb der von dem Gebäude eingenommenen Fläche inklusive der Wände, also der nach den Außenmaßen genommene Brutto-Grundfläche. Diese kann kleiner sein als die überbaute Fläche (Dachüberstand). Das Anschlussgehäuse wird zwar außerhalb der Grundfläche platziert, kann jedoch durchaus innerhalb der überbauten Fläche liegen, bspw. im Falle eines direkt an der Gebäudeaußenwand platzierten Anschlussgehäuses. Letzteres kommt insbesondere bei einer Nachrüstung im Bestand in Betracht. Andererseits kann jedoch auch ein gewisser Mindestabstand zur Gebäudegrundfläche bevorzugt sein.

Aufgrund der Platzierung des Anschlussgehäuses auf der Straße (in anderen Worten: an den Straßenrand grenzend), insbesondere dem Gehweg, etwa an die Grundstücksgrenze grenzend, muss dann bei einer nachträglichen Belegung der Gehweg / die Straße nicht nochmals aufgegraben werden, es kann bspw. auf bzw. von dem Grundstück seitlich an das Anschlussgehäuse herangegraben werden. Generell meint die "horizontale" Positionierung des Anschlussgehäuses "im Bereich einer Straße", dass das Anschlussgehäuse mit dem Schichtaufbau der Stra-ße vertikal fluchtend angeordnet ist. Ist die Straße fertiggestellt, sitzt das Anschlussgehäuse in dem Schichtaufbau der Straße (weil es zudem auf einer vertikalen Höhe innerhalb der fertigen Schichtaufbauhöhe platziert wird).

Der "Schichtaufbau" umfasst insbesondere eine Tragschicht, wobei auch mehrere aufeinandergesetzte Tragschichten möglich sind. Das Baustoffgemisch der Tragschicht kann insbesondere Schotter umfassen, dieser wird verdichtet. Darauf kommt eine Deckschicht, bspw. Asphalt oder Platten bzw. Pflastersteine, im Allgemeinen ist jedoch bspw. auch eine ungebundene Deckschicht möglich (eine Schotterschicht im Falle eines Schotterwegs). Das Platzieren im Schichtaufbau der Straße ist bspw. insoweit von Vorteil, als diese Schicht(en) verdichtet ist bzw. sind, also eine gute mechanische Stabilität bieten. Dies ist im vorliegenden Zusammenhang von besonderer Bedeutung, weil die Datenkabel bzw. die vergleichsweise dünnen Leerrohre dafür relativ empfindlich sind. Die Rohre (aus Kunststoff) bzw. Datenkabel können leicht abknicken, wobei die Glasfasern brechen können und ihre Funktion verlieren. Würde man das Anschlussgehäuse nicht im definierten Schichtaufbau der Straße, sondern an beliebiger Stelle im Erdreich platzieren, kann es bei Setzungen im Erdreich zu einem Abknicken bzw. anderweitigen Beschädigung des Leerrohres/Datenkabels kommen. Der Schichtaufbau der Straße wird hingegen definiert verdichtet, was z. B. mit einem dynamischen Plattendruckgerät und/oder einer Rammsonde (Gleichmäßigkeit der Verdichtung) überprüft werden kann (bzw. im Straßenbau überprüft wird).

Bei der Montage bzw. Herstellung des Schichtaufbaus der Straße wird dann also seitlich um das Anschlussgehäuse herum z. B. eine Schotterschicht verdichtet, etwa mit einer Rüttelplatte. Bevorzugt gibt es mehrere aufeinander gesetzte, also nacheinander hergestellte Schotterschichten, die jeweils um das Anschlussgehäuse herum verdichtet werden. Das Anschlussgehäuse ist dann, speziell nach Aufbringen der Deckschicht, definiert und stabil eingebaut. Auch mit Blick auf einen solchen Einbau hat das Anschlussgehäuse bevorzugt eine Wandstärke (Gehäusewanddicke) von mindestens 5 mm, 7 mm, bzw. 8 mm, mit möglichen (davon unabhängigen) Obergrenzen bei z. B. höchstens 25 mm, 20 mm bzw. 15 mm (eine entsprechende Wandstärke soll die Gehäusewand nicht nur punktuell, sondern großflächig haben, bspw. über mindestens 70 %, 80 % bzw. 90 % der Gehäusewandfläche, bevorzugt über 100 %). Damit kann insbesondere auch im Falle des bevorzugt aus Kunststoffmaterial vorgesehenen Anschlussgehäuses eine hinreichende Stabilität erreicht werden. Generell kann das Anschlussgehäuse auch aus Metall vorgesehen sein (z. B. Druckguss), bevorzugt ist ein Kunststoffmaterial (Hartkunststoff), z. B. Polyamid, insbesondere Glasfaser-verstärkt, oder ein Copolymer-Material.

Aufgrund der erforderlichen Abstimmung mit den Tiefbau- /Straßenbauunternehmen etc. mag die Positionierung im Straßenbereich zwar zunächst nachteilig erscheinen, in der Gesamtschau überwiegen jedoch die technischen Vorteile. Der Begriff "Straße" umfasst hierbei sowohl die Fahrbahn als auch den Gehweg, weitere Bestandteile können ein Radweg und auch Mittel- bzw. Seitenstreifen (Überland/Autobahn) sein. Prinzipiell kann das Anschlussgehäuse in jedem der genannten Bereiche platziert werden (im Bereich der Fahrbahn oder des Radwegs oder des Mittel-/Seitenstreifens oder des Gehwegs), bevorzugt ist bei einer üblichen Bebauung im örtlichen/städtischen Bereich eine Positionierung im Bereich des Gehwegs, besonders bevorzugt an der Grundstücksgrenze (am Straßenrand).

Das Anschlussgehäuse kann dabei auch direkt an die Gebäudegrundfläche grenzend platziert werden, wenn bspw. im städtischen Bereich die Außenwand direkt am Gehweg liegt. Es kann es aber andererseits zwischen Gebäudegrundfläche und Anschlussgehäuse auch einen Mindestabstand von mindestens 1 m, 2 m bzw. 3 m geben. Mögliche Obergrenzen, die im Einzelnen auch von der Grundstücksgröße abhängen, können bspw. bei höchstens 50 m, 40 m, 30 m, 20 m, 15 m bzw. 10 m liegen.

Wie bereits erwähnt, wird das Anschlussgehäuse auf einer Höhe innerhalb der fertigen Schichtaufbauhöhe der Straße platziert. Dies meint nicht, dass zur Erfüllung des hauptanspruchsgemäßen Gegenstands dann auch noch der Schichtaufbau erstellt werden muss (was in der Praxis in der Regel von anderen Arbeitern und mitunter auch erst deutlich später vorgenommen wird). Ist der Schichtaufbau dann fertig erstellt, sitzt das Anschlussgehäuse jedoch innerhalb davon. Bevorzugt liegt eine Oberkante des Anschlussgehäuses im Wesentlichen bündig mit der Oberkante des Schichtaufbaus (deren Lage ist vorab bekannt), also mit der Oberkante der Deckschicht. "Im Wesentlichen bündig" meint bspw. einen Versatz um weniger als 3 cm, 2 cm bzw. 1 cm. Im Rahmen der technisch üblichen Genauigkeit ist ein bündiger Einbau bevorzugt (0 cm). Das Anschlussgehäuse reicht bevorzugt in die Tragschicht bzw. -schichten hinein, erstreckt sich also bspw. mindestens über eine Höhe von 20 cm, 25 cm bzw. 30 cm (mit einer möglichen Obergrenze bei höchstens 50 cm, siehe unten im Detail).

Die Öffnung des Anschlussgehäuses liegt oberseitig, bevorzugt ist sie mit einem reversibel herausnehm- und wiedereinsetzbaren Deckel verschlossen. Der Deckel kann sich bevorzugt ein Stück weit in die Öffnung hineinerstrecken, was einen sicheren Sitz gewährleisten kann. Es kann insbesondere ein verschließbarer Deckel vorgesehen sein, um einem unbefugten Zugang zu dem Gehäuseinneren vorzubeugen. Der Deckel lässt sich dann also nur mit einem speziellen Schlüssel öffnen. Das Anschlussgehäuse kann, von dem Deckel abgesehen, für sich einstückig sein; es kann aber auch mehrteilig vorgesehen sein, insbesondere in ein Ober- und ein Unterteil unterteilt sein. Diese Teile können zur Höhenpassung vertikal zueinander verschiebbar sein, also teleskopartig eine gewisse Anpassung der vertikalen Erstreckung des Anschlussgehäuses ermöglichen.

Mit Blick auf die bevorzugten Glasfaserkabel, die bestimmte minimale Biegeradien haben (Bruchgefahr), kann eine Öffnung mit gewissen Mindestmaßen bevorzugt sein. Eine mittlere Öffnungsweite, die sich als Mittelwert der größten und kleinsten horizontalen Erstreckung der Öffnung ergibt und im bevorzugten Fall der Kreisform dem Kreisdurchmesser entspricht, kann bspw. bei mindestens 5 cm liegen, weiter und besonders bevorzugt mindestens 10 cm bzw. 12 cm. Mögliche Obergrenzen können (davon unabhängig) bspw. bei höchstens 40 cm bzw. 30 cm liegen. Der Deckel ist dann der Öffnung entsprechend bemessen.

Wie vorstehend dargelegt, können sich vielfältige Vorteile ergeben, wenn die "Datennutzer- oder -verteilerstelle" ein Gebäude ist, bspw. ein Büro- oder Wohngebäude, wobei sowohl ein Mehrfamilienhaus als auch insbesondere ein Einfamilienhaus infrage kommt. Wie eingangs erwähnt, kann es sich bei der "Datennutzer-bzw. -verteilerstelle" jedoch auch um eine Antennenstation bzw. -einheit handeln, bspw. für öffentliches WLAN. Eine solche Antenneneinheit kann für sich (freistehend) vorgesehen sein, sie kann aber bspw. auch Teil einer Straßenlaterne oder Ampel sein (angesetzt oder auch baulich integriert).

Im fertig montierten Zustand ist die Antenneneinheit dann mittels des Datenkabels über die Datenkabel-Verzweigungsstelle mit dem Knotenpunkt verbunden, über das Datenkabel werden Daten zu und auch von der Antenneneinheit übertragen, diese setzt das drahtgebundene Signal in ein Funksignal um. Dies kann auch ein Mobilfunksignal sein, es kann sich bei der Datennutzer- oder -verteilerstelle also bspw. auch um eine Mobilfunkstation handeln (z. B. für 5G). Eine solche Datennutzer- bzw. -verteilerstelle kann auch ein Technikgebäude umfassen, durch welches das Datenkabel geführt wird. Das Anschlussgehäuse wird dann außerhalb dieses Technikgebäudes im Bereich der Straße platziert, vgl. die vorstehenden Anmerkungen.

Prinzipiell können sich bei der Anwendung "Antenneneinheit bzw. -station" dieselben Vorteile ergeben, wie vorstehend anhand der Gebäude geschildert. Wird bspw. ein Ortsteil bzw. Straßenzug erschlossen (die Straße aufgegraben und ein Leerrohrstrang verlegt, vgl. im Detail die vorstehenden Anmerkungen zum "Bestand"), ist nicht nur für die Büro-/Wohngebäude eine Vorverlegung möglich, sondern bspw. auch zur Errichtung eines öffentlichen WLAN-Netzes. Dazu kann ein jeweiliges Anschlussgehäuse bspw. an, also neben einer Laterne platziert werden, bevorzugt direkt neben dem Laternenpfosten bzw. einem Sockel. Die Laterne kann dann später für die Antenneneinheit eine Halterungsfunktion übernehmen, zudem ist dort auch Stromanschluss verfügbar (für den Umsetzer bzw. Konverter). Durch ein entsprechendes Platzieren von Anschlussgehäusen entlang der Straße, bspw. bei jeder oder jeder n-ten Laterne, kann ein Aufbau eines solchen WLAN-Netzes veranlagt werden. Es muss dann später nicht nochmals gesondert aufgegraben werden, vgl. die vorstehenden Anmerkungen. Auch wenn der Aufbau des WLAN-Netzes bereits beschlossen ist, können die bei den Laternen platzierten Anschlussgehäuse das Prozedere vereinfachen. Analog der vorstehenden Schilderung können die Datenkabel nämlich in einem Arbeitsgang vom Knotenpunkt zu den einzelnen Anschlussgehäusen verlegt werden, die eigentliche Montage an den einzelnen Laternen kann dann nach und nach erfolgen.

Bevorzugte Ausgestaltungen finden sich in der vorliegenden Beschreibung, inklusive der Figuren, und den abhängigen Ansprüchen. In der Darstellung der Merkmale wird dabei nicht immer im Einzelnen zwischen Verfahrens- bzw. Verwendungs- oder Vorrichtungsaspekten unterschieden, jedenfalls implizit bezieht sich die Offenbarung auf sämtliche Anspruchskategorien. Wird also bspw. ein für einen bestimmten Einbau geeignetes Anschlussgehäuse beschrieben, ist dies auch als Offenbarung einer entsprechenden Verwendung bzw. des entsprechenden Verfahrens zu lesen (und umgekehrt).

Hauptanspruchsgemäß wird zwischen der Datenkabelverzweigungsstelle und dem Anschlussgehäuse das Datenkabel in einem Leerrohr für dieses verlegt. Wird das Datenkabel in dem Anschlussgehäuse dann zeitweilig in Schleifenform abgelegt (bis das entsprechende Gebäude bzw. der Nutzer/Verteiler tatsächlich angeschlossen wird, siehe vorne), wird auch in diesem Fall ein Leerrohr verlegt und das Datenkabel eingeblasen.

Erfindungsgemäß wird also zwischen der Datenkabel-Verzweigungsstelle und dem Anschlussgehäuse ein Leerrohr verlegt, das zum Verlegen des Datenkabels genutzt wird. Das Leerrohr kann bspw. einen Außendurchmesser von höchstens 30 mm, 25 mm, 20 mm bzw. 15 mm haben (eine mögliche Untergrenze kann bspw. bei mindestens 7 mm bzw. 10 mm liegen). Bei einer Wandstärke von 1-2 mm steht ein Innenquerschnitt zur Verfügung, in dem das Datenkabel gut geführt ist.

Generell wird das Leerrohr auf einer Höhe innerhalb der fertigen Schichtaufbauhöhe der Straße bzw. des Bodens verlegt, also unterhalb der Oberkante der fertigen Deckschicht (Pflaster/Platten bzw. Asphalt). Es kann bspw. mindestens 10 cm, 20 cm, 30 cm bzw. 40 cm unterhalb letzterer verlaufen, mit möglichen Obergrenzen bei höchstens 1,5 m, 1,2 m bzw. 1 m. Bevorzugt liegt das Leerrohr über die gesamte Strecke zwischen Datenkabel-Verzweigungsstelle und Anschlussgehäuse im Erdreich, also unterhalb der Oberkante des Schichtaufbaus.

Wie bereits erwähnt, wird das Datenkabel, wenn das Leerrohr belegt wird, in bevorzugter Ausgestaltung mit einer Überlänge in das Anschlussgehäuse verlegt. Im fertig in das Anschlussgehäuse verlegten Zustand soll dann ein Endabschnitt des Datenkabels eine Länge von mindestens 1 m haben, wobei mindestens 2 m, 3 m, 4 m, 5 m, 6 m, 7 m, 8 m, 9 m bzw. 10 m weitere bevorzugte Untergrenzen sind. Mögliche Obergrenzen können bspw. höchstens 30 m, 20 m bzw. 15 m liegen. Konkret wird diese Länge zwischen der Eintrittsstelle, an welcher das Datenkabel aus dem Leerrohr in das Gehäuseinnere eintritt, bis zum Ende des Datenkabels genommen (dem Ende, das außerhalb des Leerrohres liegt, das also in einer Richtung von der Datenkabel-Verzweigungsstelle zu dem Anschlussgehäuse liegt).

Bei einer bevorzugten Ausführungsform kann die Überlänge, also der Endabschnitt, dann vorübergehend in dem Anschlussgehäuse, also im Gehäuseinneren abgelegt werden. Dazu wird der Endabschnitt bevorzugt in Schleifenform gebracht, womit sich zuverlässig minimale Biegeradien nicht unterschreiten lassen. Es kann bspw. eine Kassette vorgesehen sein, also eine Ablagefläche mit Stegen bzw. Haken darauf, deren Abstand zueinander die Größe der Schleifenform vorgibt. Eine entsprechende Halterung für die Schleife kann bspw. direkt an der Gehäuseinnenwand bzw. als anderweitig integraler Teil des Gehäuses selbst vorgesehen sein, die Kassette kann aber auch herausnehm- und wiedereinsetzbar vorgesehen sein. Das Anschlussgehäuse kann dann bspw. eine Aufnahme zum Einhängen bzw. -schieben oder -clipsen der Kassette aufweisen.

Bevorzugt wird die Öffnung des Anschlussgehäuses nach dem schleifenförmigen Ablegen des Endabschnitts verschlossen, wird also der Deckel auf- bzw. eingesetzt. Wird das Datenkabel nur kurzzeitig abgelegt und bspw. noch am selben Arbeitstag weiter zum Gebäude bzw. Nutzer/Verteiler verlegt, kann auch ein schleifenförmiges Ablegen ohne Verschließen des Deckels Vorteile bieten, kann das Datenkabel nämlich in dem Gehäuseinneren etwas geschützt sein.

Die Verlegung zwischen Anschlussgehäuse und Gebäude bzw. Nutzer/Verteiler erfolgt bevorzugt ebenfalls im Erdreich, besonders bevorzugt wird hierfür zunächst wiederum ein Leerrohr (Anschluss-Leerrohr) verlegt, durch welches dann das Datenkabel geschoben werden kann. Im Zuge einer Nachbelegung muss hierfür zwar nochmals ausgegraben werden, allerdings nur auf dem Grundstück, nicht im öffentlichen Raum (Gehweg/Straße), was einen entsprechend geringeren Aufwand bedeutet. Das Anschlussgehäuse wird im Falle eines Gebäudes nämlich bevorzugt direkt an die Grundstücksgrenze gesetzt.

Das Datenkabel bzw. der Endabschnitt wird bevorzugt derart von dem Anschlussgehäuse zum Gebäude verlegt, dass das Ende des Endabschnitts dann im Gebäude liegt. Dort liegt also der Abschlusspunkt der Linientechnik. In diesem Fall erstreckt sich das Datenkabel dann unterbrechungsfrei von diesem im Gebäudeinneren über das Anschlussgehäuse zu der Datenkabel-Verzweigungsstelle (in der Regel über diese hinaus bis zu einem Knotenpunkt). "Unterbrechungsfrei" meint insoweit ohne Verbindungstelle dazwischen (insbesondere ohne Spleißstelle). Dieses Vorgehen kann bspw. insoweit von Vorteil sein, als dann in dem Anschlussgehäuse keine "komplexeren" Arbeiten am Datenkabel erforderlich sind, also bspw. kein Spleißgerät zu dem Anschlussgehäuse geschafft werden muss. Zudem kann das Datenkabel in dem Anschlussgehäuse etwas "exponiert" gegenüber Umwelteinflüssen sein, weswegen ein unterbrechungsfreier Verlauf dort vorteilhaft sein kann.

Bei einer alternativ bevorzugten Ausführungsform wird das Anschlussgehäuse genutzt, um dort eine Verbindungsstelle herzustellen. Das Datenkabel, das sich von der Datenkabel-Verzweigungsstelle bis in das Anschlussgehäuse erstreckt, kann dort ebenfalls eine gewisse Überlänge haben, bspw. von mindestens 0,5 m, 1 m bzw. 1,5 m, was das Arbeiten vereinfachen kann. Die Überlänge wird dann jedoch typischerweise geringer als im vorherigen Beispiel sein, sie kann z. B. höchstens 5 m, 4 m, 3 m bzw. 2 m betragen.

Wird das Gebäude bzw. der Nutzer/Verteiler tatsächlich angeschlossen, wird dann zwischen dem Gebäude (Nutzer/Verteiler) und dem Anschlussgehäuse ein weiteres Datenkabel verlegt, bevorzugt in einem Anschluss-Leerrohr (vgl. insofern die vorstehenden Anmerkungen). Dieses weitere Datenkabel wird dann mit dem Datenkabel (das von der Datenkabel-Verzweigungsstelle kommt) verbunden, was im Allgemeinen bspw. auch durch Spleißen erfolgen kann. "Verbinden" ist in diesem Zusammenhang auf das Herstellen einer funktionalen Verbindungsstelle zu lesen, über welche hinweg Daten übertragbar sind. Allgemein können die vorliegend in Rede stehenden Daten insbesondere Internetdaten sein, was auch Telekommunikationsdaten wie E-Mail etc. und Telefonie (VOIP) umfasst, ebenso auch Fernseh- bzw. allgemein Unterhaltungsdaten. Wie verschiedentlich erwähnt, ist das Datenkabel bevorzugt ein Glasfaserkabel, welches eine einzige oder bevorzugt mehrere Glasfasern aufweisen kann. Beim Verbinden wird im Falle mehrerer Glasfasern dann jeweils eine Glasfaser des einen Datenkabels mit einer Glasfaser des anderen Datenkabels verbunden.

Bei einer bevorzugten Ausführungsform ist zum Verbinden des Datenkabels, das von bzw. über die Datenkabel-Verzweigungsstelle kommt, und jenem für den Gebäudeanschluss ein Stecker vorgesehen. Das erstgenannte Datenkabel kann dann bspw. vom Netzbetreiber verlegt werden, bevorzugt zunächst ohne Stecker, was das Einschieben/Einblasen vereinfacht bzw. ermöglicht. Das Datenkabel wird dann also ohne Stecker am Ende durch das Leerrohr verlegt, bevorzugt über die Datenkabel-Verzweigungsstelle in Richtung des Anschlussgehäuses (insbesondere durch Einblasen von einem Knotenpunkt aus, siehe vorne). Anschließend wird das in das Anschlussgehäuse verlegte Ende für die Steckverbindung vorbereitet, wird also bspw. ein Stecker angespleißt.

Das weitere Datenkabel, das zwischen Anschlussgehäuse und Nutzer/Verteiler bzw. Gebäude verlegt wird, ist bevorzugt an einem oder auch beiden Enden mit einem Stecker bzw. Aufsatz zum Ansetzen eines Steckers vorkonfektioniert. An einem vorkonfektionierten Ende lässt sich der Stecker dann ohne besonderes Spezialwerkzeug, insbesondere ohne Spleißgerät, zusammensetzen, exemplarisch wird auf die EP 2 482 109 A2 bzw. das Produkt DiaLink von Diamond verwiesen. Das vorkonfektionierte Ende lässt sich ohne das angesetzte Steckerteil gut durch das Anschluss-Leerrohr verlegen, danach wird das Steckerteil aufgesetzt und kann die Steckverbindung mit dem Datenkabel hergestellt werden (dies ist bspw. der Ablauf beim Einschieben des weiteren Datenkabels vom Gebäudeinneren her). Das weitere Datenkabel kann jedoch auch vom Anschlussgehäuse her eingeschoben werden, das Ende mit dem abnehm- und aufsetzbaren Steckerteil wird dann also ins Gebäudeinnere geschoben und dort zusammengesetzt. Das in dem Anschlussgehäuse angeordnete Ende kann in diesem Fall auch mit einem fertigen Stecker ausgestattet sein.

Gemäß einer bevorzugten Ausführungsform ist in dem Anschlussgehäuse ein wasserdichtes Steckergehäuse angeordnet. Zur Vereinfachung der Installation kann dieses herausnehm- und wiedereinsetzbar sein, kann also in dem Anschlussgehäuse eine entsprechende Aufnahme vorgesehen sein. Das Anschlussgehäuse kann auch für unterschiedliche Anwendungen ausgelegt sein, es kann also sowohl mit einem Steckergehäuse als auch mit einer Kassette zum Aufnehmen eines schleifenförmig abgelegten Datenkabels ausgestattet sein. Je nach Einsatz kann dann die eine oder die andere Möglichkeit genutzt werden.

In dem wasserdichten Steckergehäuse sind Datenkabel-Stecker abgedichtet zusammensteckbar. Bevorzugt weist es einen nach außen abgedichteten Innenraum auf, in dem die Datenkabel-Stecker zusammengesteckt werden können. In dem Gehäuse kann es für jedes der Datenkabel eine Durchdringungs- bzw. Einrittsstelle geben, die bspw. jeweils mit einem Dichteinsatz ausgestattet einen wasserdichten Eintritt des Kabels in den Innenraum gewährleisten kann.

Besonders bevorzugt kann ein in mindestens zwei Kammern unterteilter Innenraum sein, wobei die Kammern von außen über jeweils einen eigenen Verschluss zugänglich sind. Durch Öffnen des einen Verschlusses kann eine Kammer geöffnet und z. B. das Datenkabel eingesteckt werden, durch Öffnen des anderen Verschlusses kann die andere Kammer geöffnet und das weitere Datenkabel eingesteckt werden. Der bzw. die Verschlüsse können danach wieder verschlossen werden. Mit den separaten Kammern kann insbesondere auch dann, wenn die Datenkabel mit einem Zeitversatz verlegt werden, festgelegt sein, in wessen Verantwortungsbereich jeweils welche Vorgänge liegen. Nach dem Verlegen des Datenkabels bzw. weiteren Datenkabels wird jeweils die entsprechende Öffnung verschlossen. Wird bspw. beim Verlegen des weiteren Datenkabels die entsprechende Öffnung nicht richtig verschlossen, lässt sich dieser Montagefehler eindeutig zuordnen.

Das Anschlussgehäuse (nicht das Steckergehäuse) ist in bevorzugter Ausgestaltung nicht wasserdicht, sondern unterseitig mit einer oder mehreren Öffnungen ausgestattet. Durch diese kann von oben eingelaufenes oder eingesickertes Wasser dann wieder nach unten ablaufen. Im Allgemeinen kann das Anschlussgehäuse hingegen selbstverständlich auch wasserdicht gestaltet sein, kann also der Gehäuseinnenraum bei auf- bzw. eingesetztem Deckel ein abgeschlossenes Volumen darstellen. Die Handhabung bzw. fachgerechte Montage eines solchen Anschlussgehäuses ist jedoch mitunter schwieriger und aufwendiger, und bei Montagefehlern kann schließlich doch Wasser eindringen, das dann nicht ablaufen kann (sondern im Gehäuseinnenraum steht).

Für das Leerrohr gibt es bevorzugt eine gedichtete Anschlussstelle am Gehäuse (gedichtet gegen das Leerrohr). Dazu kann die Anschlussstelle ein Dichtelement aufweisen, an welches das Leerrohr angesetzt wird, bevorzugt wird das Leerrohr eingeschoben. Prinzipiell ist auch ein alleiniges Einschieben des Leerrohres denkbar, einem Steckfitting vergleichbar. Bevorzugt wird nach dem Einschieben des Leerrohres eine Überwurfmutter auf- bzw. festgeschraubt, die dann bspw. mit bzw. über eine Schrägfläche das Dichtelement andrücken kann. Unabhängig von der technischen Umsetzung im Einzelnen ist also ein Fitting (Schraub- und/oder Steckfitting) zum Ansetzen des Leerrohres in das Anschlussgehäuse integriert, insbesondere an bzw. in eine Außenwand davon gesetzt. Bevorzugt weist das Anschlussgehäuse eine weitere Anschlussstelle auf, nämlich für das Anschluss-Leerrohr, bevorzugt sind die Anschlussstellen dann identisch aufgebaut. Generell ist bzw. sind die Anschlussstelle(n) baulich am Anschlussgehäuse festgelegt, schaffen sie also für das bzw. die Leerrohre einen räumlichen Fixpunkt am Anschlussgehäuse, also einer Außenwand davon (einer Seitenwand oder bevorzugt Bodenwand, siehe unten). Das jeweilige Leerrohr ist damit auszugsicher am Anschlussgehäuse gehalten, was einem Abknicken bzw. anderweitigen Beschädigung des Leerrohres (und damit des Datenkabels) vorbeugen hilft.

In bevorzugter Ausgestaltung wird das Leerrohr und/oder das Gebäudeanschluss-Leerrohr zum Gehäuseinneren hin gedichtet. Ist durch das entsprechende Leerrohr ein Datenkabel verlegt, kann bspw. ein Dichtelement mit einer entsprechenden Durchlassöffnung vorgesehen sein (dieses dichtet gegen das Kabel und gegen das Leerrohr). Ist noch kein Datenkabel verlegt, kann das Leerrohr mit einem Blindstopfen bzw. -verschluss verschlossen sein. Das Abdichten der Leerrohre kann bspw. einem Wassereintritt (zum Gebäude oder Knotenpunkt hin) vorbeugen oder auch eine Barriere für Schleichgas darstellen. Speziell in Verbindung mit der vorstehend geschilderten "Auszugsicherung" kann das Abdichten die Sicherheit erhöhen, weil damit einem Verrutschen bzw. -setzen des Leerrohres vorgebeugt wird, bei dem sich die Abdichtung des Leerrohres lösen könnte. Besonders bevorzugt kann eine Integration der Leerrohr-Abdichtung in die Anschlussstelle sein, wird dort also das Leerrohr angesetzt und gehalten, sowie zugleich gedichtet (nicht bzw. nicht nur an der Außenwandfläche, sondern auch der Innenraum).

Bei einer bevorzugten Ausführungsform weist das Anschlussgehäuse eine Führungsvorrichtung auf, um ein von der Datenkabel-Verzweigungsstelle her eingeschobenes Datenkabel nach oben durch die Öffnung aus dem Anschlussgehäuse herauszuführen. Diese Führungsvorrichtung schließt an die Eintrittsstelle an, an welcher das Datenkabel ins Gehäuseinnere gelangt. Sie ist bevorzugt in ihrer Position am Anschlussgehäuse festgelegt, bspw. angeformt oder befestigt. Sie ist bevorzugt an der Anschlussstelle befestigt an welche gehäuseaußenseitig das Leerrohr gesetzt ist. Die Führungsvorrichtung kann einen Kanal begrenzen, in dem das Ende des Datenkabels beim Einschieben ins Gehäuseinnere nach oben geführt wird. Dieser Kanal kann im Allgemeinen auch offen sein, bspw. eine U-bzw. V-Form haben, er kann jedoch auch von einem kurzen Rohrstück gebildet sein. Als Führungsvorrichtung kann im Allgemeinen auch ein Leitblech oder dergleichen vorgesehen sein, funktional soll das Ende des Datenkabels entlang der Führungsvorrichtung nach oben gelenkt werden. Die Führungsvorrichtung kann damit einem Verfangen des Datenkabels im Gehäuseinneren bzw. Öffnungsrand etc. vorbeugen, also eine Beschädigung vermeiden helfen.

Wie bereits erwähnt, liegt die Datenkabel-Verzweigungsstelle an einem Leerrohrstrang, bildet sie nämlich einen Abzweig davon. Der Leerrohrstrang erstreckt sich entlang mehrerer Nutzer- bzw. Verteilerstellen. Er erstreckt sich entlang mehrerer Gebäudegrundflächen, die bereits bebaut sein können (Bestand) oder bebaut werden (Neubaugebiet). Ein Abstand zwischen Datenkabel-Verzweigungsstelle und Anschlussgehäuse kann bspw. höchstens 15 m, 10 m, 5 m bzw. 3 m betragen, mögliche Untergrenzen können (davon unabhängig) bei z. B. mindestens 0,5 m bzw. 1 m liegen.

Im Bestand kann bei der Erschließung dann bei einem oder auch mehreren der Gebäude direkt ein Leerrohr von der jeweiligen Datenkabel-Verzweigungsstelle zum Gebäude verlegt werden, also ohne Anschlussgehäuse dazwischen. So kann für jene Haushalte bzw. Eigentümer vorgegangen werden, die sich bereits bei der Erschließung für einen entsprechenden Datenanschluss entscheiden. Bei jenen Gebäuden, für die (vorerst) kein Datenanschluss gewünscht ist, wird jeweils ein Anschlussgehäuse platziert (und über ein Leerrohr von der Datenkabel-Verzweigungsstelle angeschlossen). Prinzipiell könnten dabei mehrere Gebäude auch über ein gemeinsames Anschlussgehäuse zusammengefasst werden, bevorzugt wird jedem Gebäude ein eigenes Anschlussgehäuse zugeordnet. Bezüglich der Möglichkeiten zur Platzierung des Anschlussgehäuses (direkt an der Gebäudegrundfläche oder an der Grundstücksgrenze etc.) wird auf die vorstehenden Ausführungen verwiesen, gleiches gilt für die Möglichkeiten der Vorbereitung der Nachbelegung (Endabschnitt in Schleifenform im Gehäuseinneren vorgehalten, Stecker oder auch vorerst nur Leerrohranbindung).

Im Neubaugebiet werden bevorzugt sämtliche Anschlüsse über ein Anschlussgehäuse geführt, bevorzugt ist für jedes Gebäude ein eigenes Anschlussgehäuse vorgesehen. Mit Blick auf die noch folgenden Bauarbeiten wird dieses dann bevorzugt an der Grundstücksgrenze platziert. Auch hier kommen prinzipiell sämtliche vorstehend diskutierten Verlegetechniken (zwischen Anschlussgehäuse und dem dann errichteten Gebäude) in Betracht, im Anschlussgehäuse kann dann der Endabschnitt schleifenförmig abgelegt werden oder die Anbindung über einen Stecker vorbereitet werden. Von dem Knotenpunkt aus können die einzelnen Datenkabel jedenfalls in einem Arbeitsvorgang verlegt werden.

Gemäß einer bevorzugten Ausführungsform wird das Anschlussgehäuse zwischen der Datenkabel-Verzweigungsstelle und dem Gebäude zwar außerhalb einer Gebäudegrundfläche (vgl. die vorst. Definitionen) positioniert, dabei aber nahe an der Gebäudegrundfläche, bspw. in einem Abstand von höchstens 1 m, bevorzugt direkt daran grenzend. Bevorzugt wird das Anschlussgehäuse so platziert, dass es an eine Außenwandfläche einer Kelleraußenwand des Gebäudes grenzt (z. B. in der Stadt, Gebäudeaußenwand/Fassade direkt am Gehweg).

Die Positionierung an der Gebäudegrundfläche kann bspw. auch insoweit von Vorteil sein, als die Verbindung zwischen Anschlussgehäuse und Gebäude dann auch ganz ohne Aufgraben hergestellt werden kann. Durch die Gebäudeaußenwand kann gebohrt werden, durch diese Bohrung lässt sich das Datenkabel bzw. weitere Datenkabel (siehe vorne) dann ins Gebäude verlegen. Die Bohrung kann bspw. oberirdisch in die Gebäudeaußenwand eingebracht werden, etwa im Falle eines kellerlosen Gebäudes, oder im Falle eines unterkellerten Gebäudes auch unterirdisch, also in die Kelleraußenwand. Zu einer oberirdischen Bohrung kann das (weitere) Datenkabel bspw. in einem Kabelschacht entlang der Außenwandfläche geführt werden, die unterirdische Bohrung kann sich bevorzugt direkt in das Anschlussgehäuse erstrecken.

Eine Anschlussgehäusevorrichtung kann in einem vorliegend geschilderten Verfahren Anwendung finden. Diese weist zum einen das Anschlussgehäuse und zum anderen einen Ständer auf, der das Anschlussgehäuse trägt. Wird also der Ständer im Erdreich auf dem Boden platziert, ist das Anschlussgehäuse damit etwas angehoben. Es ist insbesondere eine Unterseite zugänglich, also ein Unterboden des Anschlussgehäuses, dort sitzt bzw. sitzen dann die Anschlussstelle(n) für das/die Leerrohr(e).

Das bzw. die Leerrohre werden also von unten an/in das Anschlussgehäuse geführt. Geht man bspw. von einer Verlegetiefe von rund 60 cm aus, kann das Anschlussgehäuse dementsprechend eine in Höhenrichtung kompaktere Bauform haben, bspw. von höchstens 50 cm, bevorzugt höchstens 40 cm. Eine mögliche Mindesthöhe des Anschlussgehäuses kann bspw. bei mindestens 15 cm, 20 cm bzw. 25 cm liegen. Die unterseitige Anordnung der Anschlussstellen erlaubt also einerseits eine gewisse Mindesttiefe der Verlegung (Frostsicherheit etc.), andererseits wird das Anschlussgehäuse insgesamt nicht zu groß, was hinsichtlich der Material- bzw. Transportkosten und auch die Handhabung betreffend von Vorteil sein kann.

Die Erfindung betrifft auch eine Verwendung, bei welcher ein Anschlussgehäuse gemäß Anspruch 1 platziert wird. Teil der Verwendung kann insbesondere auch das anschließende Öffnen des Deckels sein (zu Montagezwecken), danach kann die Öffnung wieder verschlossen werden (mit dem Deckel).

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: eine Anschlussgehäusevorrichtung mit einem Anschlussgehäuse zur Durchführung eines erfindungsgemäßen Verfahrens in einer teilweise geschnittenen Seitenansicht;
- Figur 2: verschiedene Möglichkeiten zur Positionierung von Anschlussgehäusen bei einer Erschließung von Gebäuden im Bestand;
- Figur 3a,b: eine erste Möglichkeit zur Weiterverlegung zwischen Anschlussgehäuse und Gebäude bzw. Verteiler/Nutzer;
- Figur 4: analog Figur 2 eine Möglichkeit zur Positionierung von Anschlussgegehäusen im Falle eines Neubaugebiets;
- Figur 5: eine zweite Möglichkeit zur Weiterverlegung zwischen Anschlussgehäuse und Gebäude bzw. Verteiler/Nutzer;
- Figur 6: eine WLAN-Einheit für öffentliches WLAN als Nutzer/Verteiler, die für sich nicht unter den Hauptanspruch fällt, aber den technischen Hintergrund illustriert.

### Bevorzugte Ausführung der Erfindung

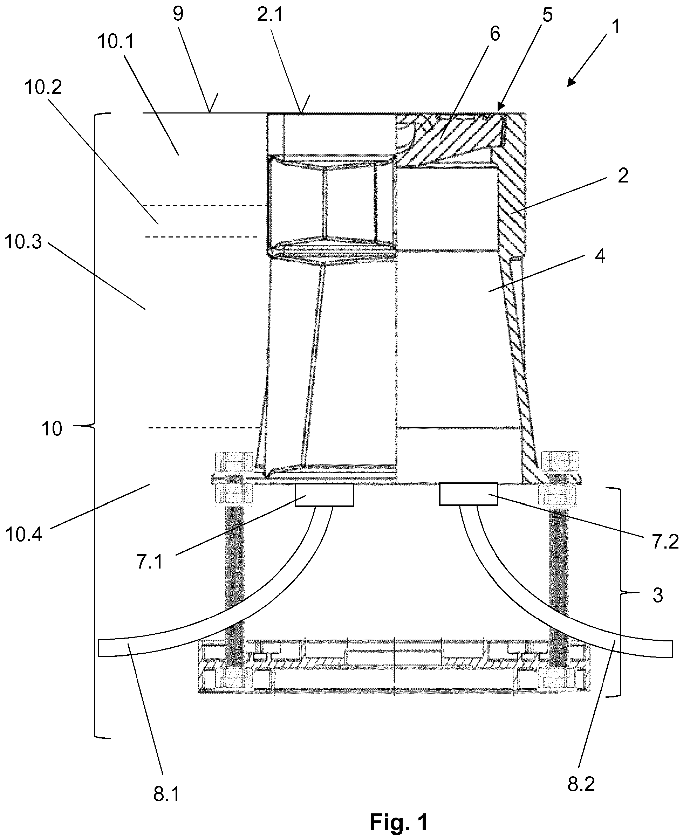

Figur 1 zeigt eine Anschlussgehäusevorrichtung 1 mit einem Anschlussgehäuse 2 und einem Ständer 3. Das Anschlussgehäuse 2 begrenzt einen Gehäuseinnenraum 4, dieser ist von oben durch eine Öffnung 5 zugänglich. Die Öffnung 5 ist vorliegend mit einem Deckel 6 verschlossen, der nach oben herausgenommen werden kann.

Unterseitig ist das Anschlussgehäuse 2 mit zwei Anschlussstellen 7.1,7.2 ausgestattet. Wie nachstehend im Einzelnen diskutiert, wird in die Anschlussstelle 7.1 ein Leerrohr 8.1 eingeschoben, dass sich dann von einem Leerrohrstrang zu dem Anschlussgehäuse 2 erstreckt. In die Anschlussstelle 7.2 wird, je nach Anwendung und Vorgehen im Einzelnen, ein Anschluss-Leerrohr 8.2 eingeschoben, welches dann das Anschlussgehäuse 2 mit dem Verteiler/Nutzer, bspw. einem Gebäude verbindet.

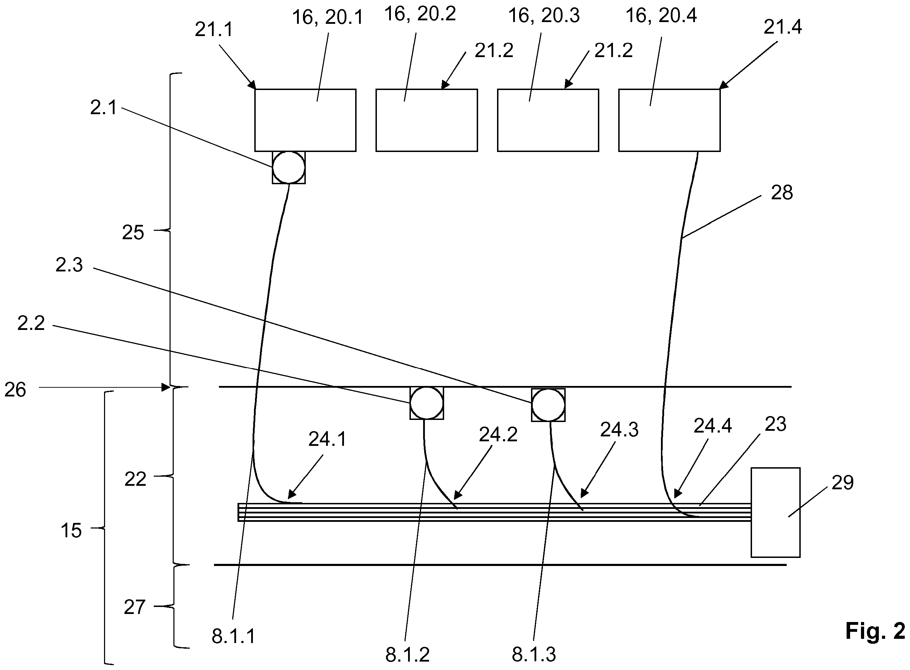

Das Anschlussgehäuse 2 wird außerhalb des Gebäudes im Schichtaufbau 10 der Straße 15 platziert (siehe auch Fig. 2), sodass also eine Oberkante 2.1 des Anschlussgehäuses 2 bündig mit einer Oberkante 9 des Schichtaufbaus 10 liegt, der in der linken Bildhälfte skizziert ist. Eine obere Schicht 10.1 kann bspw. die Pflasterschicht (Gehweg) oder Asphaltdeckschicht (Straße) sein, die Schicht 10.2 darunter kann entsprechend ein Bett oder eine Binderschicht sein. Die darunterliegenden Schichten 10.3,10.4 stellen Tragschichten dar. Wird das Anschlussgehäuse 2 positioniert, ist die Lage der Oberkante 9 bereits bekannt (festgelegt), auch wenn der Schichtaufbau 10 mitunter erst deutlich später erstellt wird.

Figur 2 illustriert verschiedene Möglichkeiten bei einer Anwendung im Bestand. In der hier dargestellten Situation wird ein Straßenzug durch Glasfaserverlegung erschlossen. Schematisch sind als Datennutzerstellen 16 vier Gebäude 20.1-20.4 dargestellt, die jeweils auf einer Gebäudegrundfläche 21.1-21.4 stehen. Für die Erschließung wird der Gehweg 22 aufgebrochen und wird ein Graben ausgehoben, dieser ist in der schematischen Aufsicht nicht im Einzelnen dargestellt. In dem Graben wird ein Leerrohrstrang 23 verlegt, für jedes Gebäude 20.1-20.4 gibt es eine jeweilige Datenkabel-Verzweigungsstelle 24.1-24.4. Zur Illustration und Orientierung: in der Darstellung oberhalb des Gehwegs 22 erstrecken sich die jeweiligen Grundstücke 25, dazwischen liegt jeweils die Grundstücksgrenze 26. In der Darstellung unterhalb des Gehwegs 22 verläuft die Fahrbahn 27, die wie der Gehweg 22 Teil der Straße 15 ist.

Im Zuge der Erschließung dieses Straßenzugs hat sich hier exemplarisch nur ein Eigentümer für einen sofortigen Anschluss entschlossen, dies ist das Gebäude 20.4. In diesem Fall kann von der Datenkabel-Verzweigungsstelle 24.4 zu dem Gebäude 20.4 direkt ein Leerrohr 28 verlegt werden. Durch dieses wird dann das Datenkabel verlegt.

Für die Gebäude 20.1-20.3, für die (vorerst) kein Anschluss gewünscht ist, wird jeweils ein Anschlussgehäuse 2.1-2.3 platziert. Ferner wird, weil ja der Graben momentan ausgehoben ist, ein jeweiliges Leerrohr 8.1.1-8.1.3 zwischen der jeweiligen Datenkabel-Verzweigungsstelle 24.1-24.3 und dem jeweiligen Anschlussgehäuse 2.1-2.3 verlegt, vgl. auch die Zusammenschau mit Figur 1 zur Illustration.

Der Graben kann dann aufgeschüttet, und es kann der Schichtaufbau 10 wiederhergestellt werden.

Soll dann später zu einem der Gebäude 20.1-20.3 doch ein Datenkabel verlegt werden, muss jedenfalls der Gehweg 22 nicht mehr aufgegraben werden. Durch das entsprechende Leerrohr 8.1.1-8.1.3 kann über die jeweilige Datenkabel-Verzweigungsstelle 24.1-24.3 von einem Knotenpunkt 29 aus ein Datenkabel eingeblasen werden, es kann der Deckel 6 des Anschlussgehäuses 2 geöffnet und das Datenkabel dort entgegengenommen werden. Bei dem Gebäude 20.1 sitzt das Anschlussgehäuse 2.1 direkt an der Gebäudegrundfläche 21.1, und zwar nicht hauptanspruchsgemäß nicht im Bereich der Straße, sondern auf dem Grundstück 25. Bei der Platzierung direkt am Gebäude muss gar nicht mehr aufgegraben, sondern nur durch die Gebäudeaußenwand gebohrt werden. Bei den Gebäuden 20.2,20.3 muss zur Erdverlegung zwar ein Stück auf dem Grundstück 25 ausgehoben werden, der Aufwand hierfür ist jedoch deutlich geringer als für das Aufgraben des Gehwegs 22.

Aufgrund ihrer Positionierung im Schichtaufbau 10 der Straße 15 sind die Anschlussgehäuse 2.2,2.3 stabil gehalten, sie können nicht absacken bzw. verkippen. Damit kann einem Herausrutschen der Leerrohre 8.1,8.2 und damit einem Abknicken des Datenkabels vorgebeugt werden. Ein einfach in die Erde gesetztes, also nicht in Tragschichten 10.3,10.4 eingefasstes Anschlussgehäuse 2 wäre hingegen instabil, speziell Glasfaserkabel wären bruchgefährdet. Das Anschlussgehäuse 2.1 ist zwar nicht im Schichtaufbau 10 der Straße 15 vorgesehen, jedoch aufgrund der Positionierung direkt am Gebäude 20.1 stabilisiert.

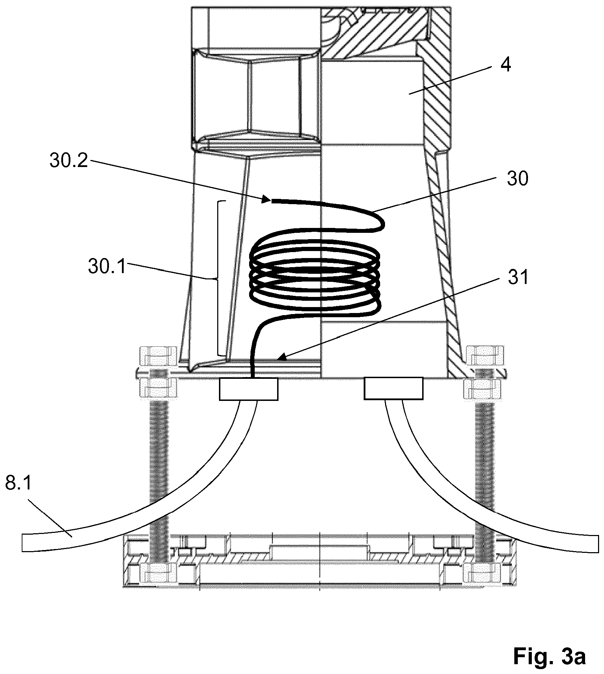

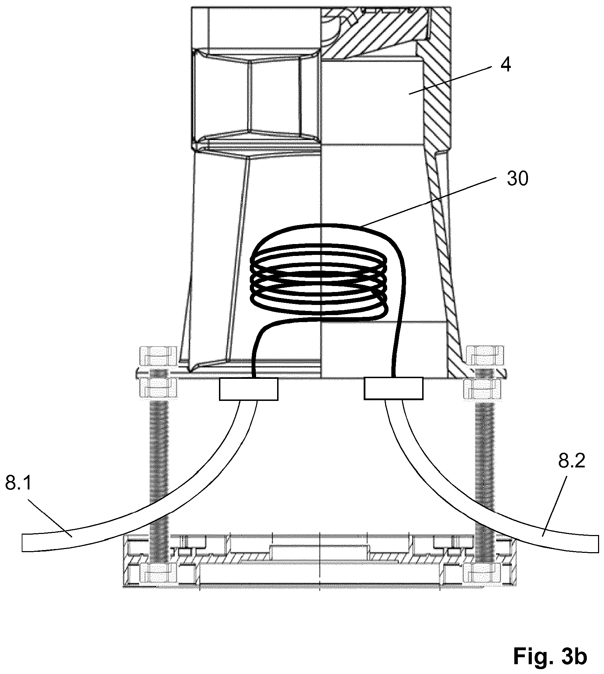

Die Figuren 3a,b illustrieren in einer Darstellung analog Figur 1, wie ein Datenkabel 30 durch das Leerrohr 8.1 in das Gehäuseinnere 4 verlegt wird. Dies erfolgt mit einer Überlänge, ein Endabschnitt 30.1 des Datenkabels 30 hat von einer Eintrittsstelle 31 in das Gehäuseinnere 4 weg genommen eine Länge von rund 10 m.

Figur 3b illustriert, wie dieser Endabschnitt 30.1 dann durch das vorab oder nachträglich angesetzte Anschluss-Leerrohr 8.2 weiter zur Datennutzer- bzw. - verteilerstelle 16 verlegt, also im Falle von Fig. 2 zum Gebäude. Konkret wird das Ende 30.2 des Datenkabels 30 in das Leerrohr 8.2 eingeschoben, im fertig installierten Zustand liegt es dann innerhalb des Gebäudes.

Der Zustand gemäß Figur 3a (Vorverlegung bis in das Anschlussgehäuse 2) kann in der Situation gemäß Figur 2 für die Anschlussgehäuse 2.1-2.3 im selben Arbeitsvorgang hergestellt werden, in dem auch der Anschluss durch das Leerrohr 28 gelegt wird. Es wäre dann also in jedes der Anschlussgehäuse 2.1-2.3 ein Datenkabel 30 vorverlegt, wobei der entsprechende Endabschnitt 30.1 bevorzugt in Schleifenform (Bruchgefahr) abgelegt wird. Zusammengefasst gibt es also einerseits die Möglichkeit, dass die Anschlussgehäuse 2.1-2.3 bei der Vorverlegung bereits tatsächlich mit Datenkabeln 30 bestückt werden. Andererseits ist jedoch auch allein die Positionierung und Anbindung über die Leerrohre 8.1.1-8.1.3 dahingehend ausreichend, dass der Gehweg nicht mehr aufgegraben werden muss.

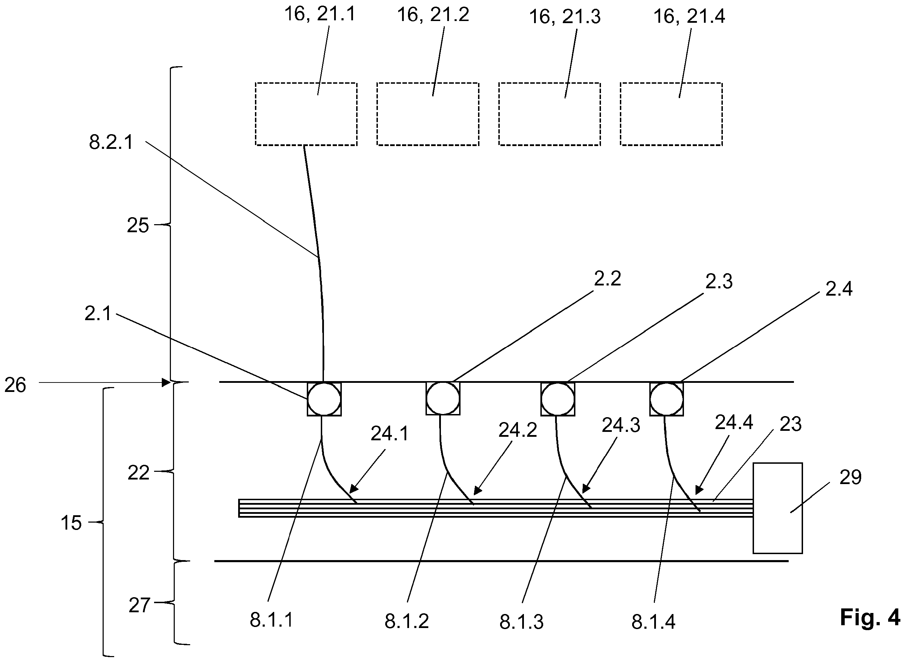

Figur 4 illustriert eine Anwendung in einem Neubaugebiet. Zur Orientierung sind wiederum der Gehweg 22 und die Fahrbahn 27 der Straße 15 eingezeichnet, wobei diese bei der Verlegung des Leerrohrstranges 23 noch gar nicht hergestellt sind. In diesem Fall sind auch noch keine Gebäude erstellt (jedenfalls noch nicht vollständig), weswegen nur die Gebäudegrundflächen 21.1-21.4 eingezeichnet sind.

Bei der Verlegung des Leerrohrstranges 23 wird an jeder Datenkabel-Verzweigungsstelle 24.1-24.4 ein jeweiliges Leerrohr 8.1.1-8.1.4 zu einem jeweiligen Anschlussgehäuse 2.1-2.4 verlegt. Die Anschlussgehäuse 2.1-2.4 werden in diesem Fall an den Grundstücksgrenzen 26, aber noch auf dem Gehweg 22 platziert. Dadurch werden die späteren Bauarbeiten auf den Grundstücken 25 nicht behindert.

Wird dann das erste Gebäude fertiggestellt, bspw. auf der Gebäudegrundfläche 21.1, wird zwischen dem Anschlussgehäuse 2.1 und diesem Gebäude ein Anschluss-Leerrohr 8.2.1 verlegt. Von dem Knotenpunkt 29 her wird dann das Datenkabel über die Datenkabel-Verzweigungsstelle 24.1 und das Anschlussgehäuse 2.1 bis in das Gebäude verlegt. In diesem Zuge werden dann auch zu den anderen Anschlussgehäusen 2.2-2.4 bereits die Datenkabel verlegt, sie können dort analog Figur 3a abgelegt werden. Es muss dann vorteilhafterweise nur einmal an dem Knotenpunkt 29 hantiert werden.

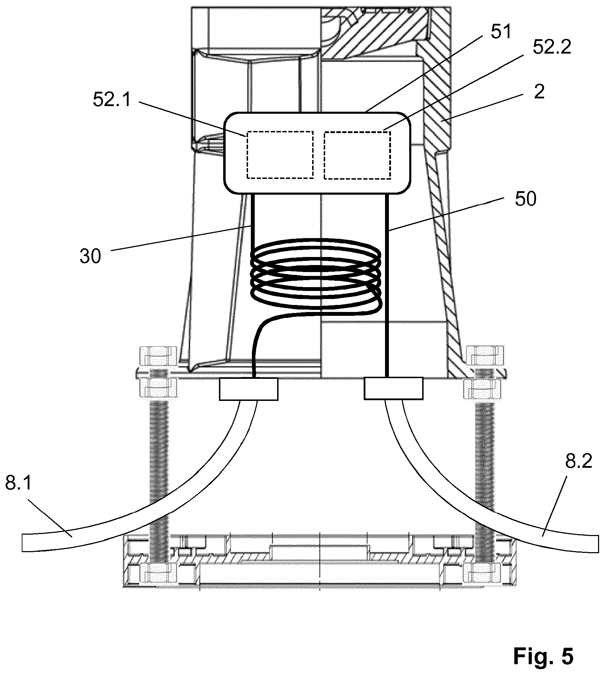

Figur 5 illustriert eine Alternative zu dem Vorgehen gemäß den Figuren 3a,b, nämlich die Herstellung der Nutzer/Verteiler-, insbesondere Gebäudeanbindung über ein weiteres Datenkabel 50. Dieses wird in dem Anschlussgehäuse 2 mit dem Datenkabel 30 verbunden, vorliegend durch Zusammenstecken in einem Steckergehäuse 51. Dieses weist einen abgedichteten Innenraum auf, in diesem werden die Datenkabel 30,50 zusammengesteckt. Jedes der Datenkabel 30,50 tritt gedichtet in das Steckergehäuse 51 ein. Das Steckergehäuse kann prinzipiell eine Zugangsöffnung haben, bevorzugt kann eine Variante mit zwei separaten Zugangsöffnungen 52.1,52.2 sein. Jede Öffnung 52.1,52.2 ist mit einem eigenen Verschluss versehen, die Öffnung 52.1 wird zum Einbringen des Datenkabels 30 geöffnet, die Öffnung 52.2 zum Einbringen des Datenkabels 50.

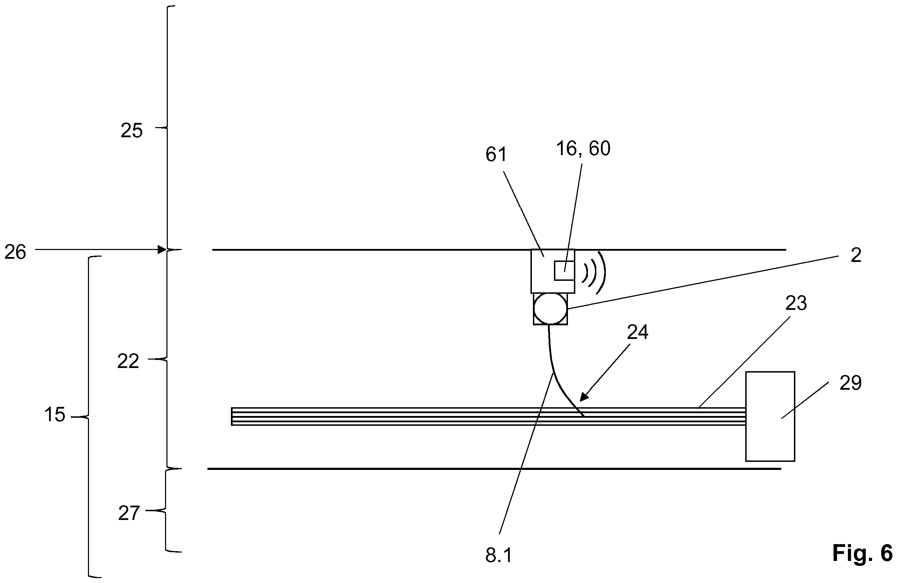

Figur 6 zeigt eine weitere Anwendungsmöglichkeit, wobei das Anschlussgehäuse 2 wiederum zwischen einer Datenkabel-Verzweigungsstelle 24 und einer Datennutzer- oder -verteilerstelle 16 platziert wird. Konkret handelt es sich bei letzterer um eine Funkeinheit 60, nämlich ein WLAN-Modul. Dieses ist bzw. wird zur Bereitstellung eines öffentlichen WLAN-Netzes in einem hier schematisch gezeigten Laternenpfosten 61 angeordnet. Bei der Erschließung des Straßenzugs, also wenn der Gehweg 22 aufgegraben ist und der Leerrohrstrang 23 verlegt wird, wird das Anschlussgehäuse 2 neben dem Laternenpfosten 61 platziert und über das Leerrohr 8.1 mit der Datenkabel-Verzweigungsstelle 24 verbunden.

Bei den übrigen, entlang der Straße 15 angeordneten (nicht dargestellten) Laternenpfosten wird in analoger Weise verfahren, wird also jeweils ein Anschlussgehäuse 2 platziert (nicht zwingend an jedem Laternenpfosten, es kann bspw. auch jeder zweite für eine hinreichende Netzabdeckung ausreichend sein). Werden dann später die Datenkabel von dem Knotenpunkt 29 her eingeblasen, können die Datenkabel analog der vorstehenden Schilderung (siehe "Neubau") in einem Arbeitsgang in jedes Anschlussgehäuse 2 verlegt werden, die Anbindung des jeweiligen Funkmoduls 60 kann dann nach und nach erfolgen. Die Anschlussgehäuse 2 lassen sich auch bei Laternenpfosten 61 platzieren, wenn diese vorerst noch gar nicht mit einem Funkmodul 60 ausgestattet sind bzw. werden sollen. Das Anschlussgehäuse 2 kann eine spätere Nachrüstung deutlich vereinfachen (kein Aufgraben des Gehwegs 22).

Bei der Variante gemäß Figur 6 kann in dem Anschlussgehäuse 2 analog Figur 5 verfahren werden (Steckverbindung), bevorzugt ist die Variante gemäß den Figuren 3a,b (Hindurchschleifen einer Überlänge). Das Anschlussgehäuse 2 kann hierfür bspw. geöffnet werden, und es kann dann eine Verbindung durch eine Gehäusewand des Anschlussgehäuses 2 und eine Sockelwand des Laternenpfostens 61 gebohrt werden. Selbstverständlich kann die Variante gemäß Figur 6 bspw. auch mit jener gemäß Figur 2 kombiniert werden, können bei der Erschließung der Straße 15 also sowohl an den vorerst nicht angeschlossenen Gebäuden 20.1-20.3 als auch an Laternenpfosten 61 (oder auch Ampeln etc.) Anschlussgehäuse 2 platziert werden.

## Patentansprüche

1. Verfahren zum Bereitstellen einer Datenkabelanbindung für eine Datennutzer- oder -verteilerstelle (16), nämlich ein Gebäude (20.1-20.4) bzw. eine Gebäudegrundfläche (21.1-21.4), und zwar einer Anbindung an eine Datenkabel-Verzweigungsstelle (24),
wozu ein Anschlussgehäuse (2) vorgesehen wird, das einen Gehäuseinnenraum (4) aufweist, der von außen über eine Öffnung (5) in dem Anschlussgehäuse (2) zugänglich ist, wobei das Anschlussgehäuse (2) zwischen der Datenkabel-Verzweigungsstelle (24) und der Datennutzer- oder -verteilerstelle (16) positioniert wird, wobei
- die Öffnung (5) des Anschlussgehäuses (2) nach oben weist, also oberseitig liegt;
- das Anschlussgehäuse (2) horizontal im Bereich einer Straße (15) positioniert wird;
- das Anschlussgehäuse (2) auf einer vertikalen Höhe positioniert wird, die innerhalb einer fertigen Aufbauhöhe eines Schichtaufbaus (10) der Straße (15) liegt, wobei aber die Öffnung (5) und damit der Gehäuseinnenraum (4) von oben zugänglich bleibt;
bei welchem Verfahren ein Leerrohr (8.1) für ein Datenkabel (30) zwischen der Datenkabel-Verzweigungsstelle (24) und dem Anschlussgehäuse (2) verlegt wird, das also die Datenkabel-Verzweigungsstelle (24) mit dem Anschlussgehäuse (2) verbindet,
wobei die Verzweigungsstelle (24) an einem Leerrohrstrang (23) liegt, der sich von einem Knotenpunkt (29) ausgehend entlang mehrerer Datennutzer- oder -verteilerstellen (16) erstreckt, nämlich entlang mehrerer Gebäude (20.1-20.4) bzw. Gebäudegrundflächen (21.1-21.4), wobei jeder Gebäudegrundfläche (21.1-21.4) ein jeweiliges Anschlussgehäuse (2.1-2.4) zugeordnet wird, nämlich außerhalb der jeweiligen Gebäudegrundfläche (21.1-21.4) platziert wird,
und wobei für jedes Anschlussgehäuse (2.1-2.4) zwischen einer jeweiligen Datenkabel-Verzweigungsstelle (24.1-24.4) an dem Leerrohrstrang (23) und dem jeweiligen Anschlussgehäuse (2.1-2.4) ein jeweiliges Leerrohr (8.1.1-8.1.4) für ein jeweiliges Datenkabel verlegt wird, und wobei in den Leerrohren (8.11-8.14) danach die jeweiligen Datenkabel in einem Zug bis in die Anschlussgehäuse (2.1-2.4) verlegt werden, also in einem Arbeitsdurchgang,
wobei die Datenkabel von dem Knotenpunkt (29) aus in die Leerrohre (8.1.1-8.1.4) eingeblasen werden.

2. Verfahren nach Anspruch 1, bei welchem das in das Anschlussgehäuse (2) verlegte Datenkabel (30) dort eine Überlänge hat, nämlich ein Endabschnitt (30.1) des verlegten Datenkabels (30) von einer Eintrittsstelle (31) in das Gehäuseinnere (4) weg genommen eine Länge von mindestens 1 m hat.

3. Verfahren nach Anspruch 2, bei welchem der Endabschnitt (30.1) in dem Anschlussgehäuse (2) in Schleifenform abgelegt wird und danach die Öffnung (5) des Anschlussgehäuses (2) verschlossen wird.

4. Verfahren nach Anspruch 2 oder 3, bei welchem die Öffnung (5) des Anschlussgehäuses (2) wieder geöffnet wird und der Endabschnitt (30.1) des Datenkabels (30) zu der Datennutzer- oder -verteilerstelle (16) verlegt wird, vorzugsweise in einem Anschluss-Leerrohr (8.2).

5. Verfahren nach einem der Ansprüche 2 bis 3, bei welchem ein Endabschnitt (30.1) des Datenkabels (30), der sich in das Gehäuseinnere (4) erstreckt, mit einem weiteren Datenkabel (50) verbunden wird, das sich im verlegten Zustand von dem Anschlussgehäuse (2) zu der Datennutzer- oder - verteilerstelle (16) hin erstreckt.

6. Verfahren nach Anspruch 5, bei welchem der Endabschnitt (30.1) des Datenkabels (30) mit einem Stecker versehen ist oder wird, über welchen das Datenkabel (30) mit dem weiteren Datenkabel (50) zusammengesteckt und dadurch verbunden wird.

7. Verfahren nach einem der vorstehenden Ansprüche, bei welchem in dem Anschlussgehäuse (2) ein wasserdichtes Steckergehäuse (51) angeordnet ist, in dem Datenkabel-Stecker abgedichtet zusammensteckbar sind.

8. Verfahren nach Anspruch 7, bei welchem die Datenkabel-Stecker in einem Innenraum des wasserdichten Steckergehäuses (51) zusammensteckbar sind, der in mindestens zwei Kammern unterteilt ist, die von außerhalb des Steckergehäuses (51) jeweils über eine eigene Zugangsöffnung (52.1,52.2) mit jeweils einem eigenen, öffen- und wiederverschließbaren Verschluss zugänglich sind.

9. Verfahren nach einem der vorstehenden Ansprüche, bei welchem das Anschlussgehäuse (2) eine Öffnung aufweist, durch welche in den Gehäuseinnenraum (4) eingelaufenes oder -gesickertes Wasser nach unten ablaufen kann.

10. Verfahren nach einem der vorstehenden Ansprüche, bei welchem das Leerrohr (8.1) und/oder ein zusätzliches, an das Anschlussgehäuse (2) gesetztes Anschluss-Leerrohr auf einer Höhe innerhalb der fertigen Aufbauhöhe des Schichtaufbaus (10) verlegt wird, wobei zumindest eines der Leerrohre (8.1,8.2) zum Gehäuseinneren (4) hin gedichtet wird.

11. Verfahren nach einem der vorstehenden Ansprüche, bei welchem das Anschlussgehäuse (2) eine Führungsvorrichtung aufweist, die dazu vorgesehen ist, ein in einer Richtung von der Datenkabel-Verzweigungsstelle (24) zu dem Anschlussgehäuse (2) durch das Leerrohr (8.1) eingeschobenes Datenkabel (30) nach oben durch die Öffnung (5) des Anschlussgehäuses (2) aus diesem herauszuführen.

12. Verwendung eines Anschlussgehäuses (2), bei welcher gemäß einem der Ansprüche 1 bis 11 das Anschlussgehäuse (2) positioniert und zwischen der Datenkabel-Verzweigungsstelle (24) und dem Anschlussgehäuse (2) das Leerrohr (8.1) für ein Datenkabel (30) verlegt wird, wobei dann ferner der Schichtaufbau (10) der Straße (15) hergestellt wird, innerhalb welchem das Anschlussgehäuse (2) dann sitzt, wobei die Öffnung (5) und damit der Gehäuseinnenraum (4) von oben zugänglich ist.

## Claims

1. A method for providing a data cable connection for a data user point or data distribution point (16), namely a building (20.1-20.4) or a building footprint (21.1-21.4), particularly a connection to a data cable branching point (24),
for which purpose a connection housing (2) is provided, having a housing interior (4) being accessible from an outside via an opening (5) in the connection housing (2), the connection housing (2) being positioned between the data cable branching point (24) and the data user point or data distribution point (16), wherein
- the opening (5) of the connection housing (2) faces upwards, i.e., is at the top;
- the connection housing (2) is positioned horizontally in the area of a road (15);
- the connection housing (2) is positioned at a vertical height which is within a finished construction height of a layer structure (10) of the road (15), but with the opening (5) and thus the housing interior (4) remaining accessible from above;
in which method an empty conduit (8.1) for a data cable (30) is laid between the data cable branching point (24) and the connection housing (2), thus connecting the data cable branching point (24) to the connection housing (2),
wherein the branching point (24) is located at an empty conduit bundle (23) extending from a node (29) along several data user points or data distribution points (16), namely along several buildings (20.1-20.4) or building footprints (21.1-21.4), wherein a respective connection housing (2.1-2.4) is assigned to each building footprint (21.1-21.4), namely is placed outside the respective building footprint (21.1-21.4),
and wherein for each connection housing (2.1-2.4) a respective empty conduit (8.1.1-8.1.4) for a respective data cable is laid between a respective data cable branching point (24.1-24.4) at the empty conduit bundle (23) and the respective connection housing (2.1-2.4), and wherein in the empty conduits (8.11-8.14) the respective data cables are subsequently laid in one go to reach into the connection housings (2.1-2.4), i.e., in one working pass,
wherein the data cables are blown into the empty conduits (8.1.1-8.1.4) from the node (29).

2. The method according to claim 1, wherein the data cable (30) laid in the connection housing (2) has an excess length in the connection housing (2), namely an end section (30.1) of the laid data cable (30) has a length of at least 1 m when taken from an entry point (31) into the housing interior (4).

3. The method according to claim 2, wherein the end section (30.1) is deposited in the connection housing (2) in loop form and the opening (5) of the connection housing (2) is subsequently closed.

4. The method according to claim 2 or 3, wherein the opening (5) of the connection housing (2) is opened again and the end section (30.1) of the data cable (30) is laid to the data user point or data distribution point (16), preferably in a connection empty conduit (8.2).

5. The method according to any one of claims 2 to 3, wherein an end section (30.1) of the data cable (30) extending into the housing interior (4) is connected to a further data cable (50) which, in the laid state, extends from the connection housing (2) towards the data user point or data distribution point (16).

6. The method according to claim 5, wherein the end section (30.1) of the data cable (30) is or will be provided with a plug, via which the data cable (30) is plugged together with the further data cable (50) and thereby connected.

7. The method according to one of the preceding claims, wherein a waterproof plug housing (51) is arranged in the connection housing (2), in which data cable plugs can be plugged together in a sealed manner.

8. The method according to claim 7, wherein the data cable plugs can be plugged together in an interior of the waterproof plug housing (51), which interior is divided into at least two chambers being accessible from outside of the plug housing (51) via an own access opening (52.1, 52.2), each chamber having its own openable and reclosable closure.

9. The method according to one of the preceding claims, wherein the connection housing (2) has an opening through which water that has entered or seeped into the housing interior (4) can drain downwards.

10. The method according to one of the preceding claims, wherein the empty conduit (8.1) and/or an additional connection empty conduit placed against the connection housing (2) is laid at a height within the finished construction height of the layer structure (10), at least one of the empty conduits (8.1, 8.2) being sealed towards the housing interior (4).

11. The method according to one of the preceding claims, wherein the connection housing (2) has a guide device which is provided for guiding a data cable (30) pushed in through the empty conduit (8.1) in a direction from the data cable branching point (24) to the connection housing (2) upwards out of the connection housing (2) through the opening (5) of the connection housing (2).

12. Use of a connection housing (2), wherein the connection housing (2) is positioned in accordance with one of claims 1 to 11 and the empty conduit (8.1) for a data cable (30) is laid between the data cable branching point (24) and the connection housing (2), the layer structure (10) of the road (15) then also being produced, within which the connection housing (2) is then seated, the opening (5) and thus the housing interior (4) being accessible from above.

## Revendications

1. Procédé de fourniture d'une connexion pour câble de données pour un point d'utilisation ou de distribution de données (16), à savoir un bâtiment (20.1-20.4) ou une surface construite (21.1-21.4), et plus précisément d'une connexion à un point de branchement de câble de données (24),
aux fins duquel il est prévu un boîtier de raccordement (2) qui présente un intérieur (4) accessible depuis l'extérieur par le biais d'une ouverture (5) ménagée dans le boîtier de raccordement (2), ledit boîtier de raccordement (2) étant disposé entre le point de branchement de câble de données (24) et le point d'utilisation ou de distribution de données (16), étant entendu que
- l'ouverture (5) du boîtier de raccordement (2) est orientée vers le haut, en se situant donc sur le dessus,
- le boîtier de raccordement (2) est disposé horizontalement à proximité d'une chaussée (15),
- le boîtier de raccordement (2) est disposé à une hauteur verticale qui se situe dans une hauteur de construction finie d'une structure en couches (10) de la chaussée (15), ladite ouverture (5) et donc ledit intérieur de boîtier (4) demeurant toutefois accessibles par le haut ;
dans le cadre dudit procédé, en outre, un tuyau protecteur (8.1) destiné à un câble de données (30) est posé entre le point de branchement de câble de données (24) et le boîtier de raccordement (2), pour ainsi relier ledit point de branchement de câble de données (24) au boîtier de raccordement (2),
ledit point de branchement (24) étant situé sur un train de tuyaux protecteurs (23) s'étendant le long de plusieurs points d'utilisation ou de distribution de données (16) à partir d'un noeud (29), à savoir le long de plusieurs bâtiments (20.1-20.4) ou surfaces construites (21.1 à 21.4), un boîtier de raccordement (2.1-2.4) respectif étant associé à chaque surface construite (21.1 à 21.4), c'est-à-dire placé à l'extérieur de la surface construite (21.1 à 21.4) respective, et
un tuyau protecteur (8.1.1-8.1.4) respectif destiné à un câble de données respectif étant posé pour chaque boîtier de raccordement (2.1-2.4), entre un point de branchement de câble de données (24.1-24.4) respectif présent sur le train de tuyaux protecteurs (23) et le boîtier de raccordement (2.1-2.4) respectif, et les câbles de données respectifs étant ensuite posés dans les tuyaux protecteurs (8.1.1-8.1.4) d'un seul trait, c'est-à-dire en une seule passe de travail, jusqu'aux boîtiers de raccordement (2.1-2.4),
lesdits câbles de données étant introduits par soufflage dans les tuyaux protecteurs (8.1.1-8.1.4) à partir du noeud (29).

2. Procédé selon la revendication 1, dans lequel le câble de données (30) posé dans le boîtier de raccordement (2) y présente une surlongueur, à savoir qu'un segment d'extrémité (30.1) du câble de données (30) posé présente, à partir d'un point d'entrée (31) dans l'intérieur de boîtier (4), une longueur d'au moins 1 m.

3. Procédé selon la revendication 2, dans lequel le segment d'extrémité (30.1) est déposé dans le boîtier de raccordement (2) sous forme de spires, puis l'ouverture (5) du boîtier de raccordement (2) est refermée.

4. Procédé selon la revendication 2 ou 3, dans lequel l'ouverture (5) du boîtier de raccordement (2) est réouverte et le segment d'extrémité (30.1) du câble de données (30) est posé en direction du point d'utilisation ou de distribution de données (16), de préférence dans un tuyau protecteur de raccordement (8.2).

5. Procédé selon l'une des revendications 2 et 3, dans lequel un segment d'extrémité (30.1) du câble de données (30), qui s'étend dans l'intérieur de boîtier (4), est relié à un autre câble de données (50) qui, à l'état posé, s'étend depuis le boîtier de raccordement (2) jusqu'au point d'utilisation ou de distribution de données (16).

6. Procédé selon la revendication 5, dans lequel le segment d'extrémité (30.1) du câble de données (30) est, au préalable ou non, muni d'une fiche par laquelle le câble de données (30) est branché avec l'autre câble de données (50) et relié à ce dernier.

7. Procédé selon l'une des revendications précédentes, dans lequel un boîtier de fiches (51) étanche est agencé dans le boîtier de raccordement (2) pour permettre l'enfichage étanche de fiches des câbles de données.

8. Procédé selon la revendication 7, dans lequel les fiches de câbles de données peuvent être enfichées dans l'intérieur du boîtier de fiches (51) étanche subdivisé en au moins deux chambres, chacune accessible depuis l'extérieur du boîtier de fiches (51) par le biais de sa propre ouverture d'accès (52.1, 52.2) respectivement munie de son propre dispositif de fermeture ouvrable et refermable.

9. Procédé selon l'une des revendications précédentes, dans lequel le boîtier de raccordement (2) présente une ouverture par laquelle l'eau qui s'est écoulée ou infiltrée dans l'intérieur de boîtier (4) peut être évacuée vers le bas.

10. Procédé selon l'une quelconque des revendications précédentes, dans lequel le tuyau protecteur (8.1) et/ou un tuyau protecteur de raccordement supplémentaire placé sur le boîtier de raccordement (2) sont posés à une hauteur comprise dans la hauteur de construction finie de la structure en couches (10), au moins un des tuyaux protecteurs (8.1, 8.2) étant bouché par rapport à l'intérieur de boîtier (4).

11. Procédé selon l'une quelconque des revendications précédentes, dans lequel le boîtier de raccordement (2) présente un dispositif de guidage prévu pour extraire hors du boîtier de raccordement (2), par le haut, par l'ouverture (5) de ce dernier, un câble de données (30) introduit dans le tuyau protecteur (8.1) dans une direction allant du point de branchement de câble de données (24) jusqu'au boîtier de raccordement (2).

12. Utilisation d'un boîtier de raccordement (2), dans laquelle le boîtier de raccordement (2) est disposé selon l'une des revendications 1 à 11 et le tuyau protecteur (8.1) destiné à un câble de données (30) est posé entre le point de branchement de câble de données (24) et le boîtier de raccordement (2), ladite structure en couches (10) de la chaussée (15) étant réalisée par la suite et ledit boîtier de raccordement (2) étant alors intégré à celle-ci, ladite ouverture (5) et donc l'intérieur de boîtier (4) étant accessibles par le haut.
